(19) Europäisches Patentamt
European Patent Office
Office européen des brevets

(11) Veröffentlichungsnummer: **0 148 390**
**A2**

(12) **EUROPÄISCHE PATENTANMELDUNG**

(21) Anmeldenummer: **84114305.0**

(22) Anmeldetag: **27.11.84**

(51) Int. Cl.[4]: **C 09 B 19/02**, D 06 P 1/42, D 21 H 3/80

(30) Priorität: **08.12.83 DE 3344472**

(43) Veröffentlichungstag der Anmeldung: **17.07.85 Patentblatt 85/29**

(84) Benannte Vertragsstaaten: **CH DE FR GB LI**

(71) Anmelder: **BAYER AG, Konzernverwaltung RP Patentabteilung, D-5090 Leverkusen 1 Bayerwerk (DE)**

(72) Erfinder: **Harms, Wolfgang, Dr., Walter-Flex-Strasse 21, D-5090 Leverkusen 1 (DE)**
Erfinder: **Franke, Günter, Dr., Landrat-Trimborn-Strasse 60, D-5653 Leichlingen (DE)**
Erfinder: **Wunderlich, Klaus, Dr., Carl-Rumpff-Strasse 21, D-5090 Leverkusen 1 (DE)**

(54) **Basische Triphendioxazinfarbstoffe, ihre Herstellung und Verwendung.**

(57) Basische Triphendioxazinfarbstoffe der Formel

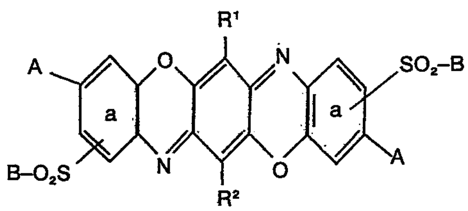

(I)

worin

$R_1$ und $R_2$ unabhängig voneinander Wasserstoff, Halogen, Alkyl, Cyclohexyl, Aryl, Alkoxy, Aryloxy, CN, $CONH_2$, CONH-Alkyl, $CON(Alkyl)_2$, CONH-Aryl, COOAlkyl, NH-CO-Alkyl, NH-CO-Aryl oder NH-Aryl und

A und B unabhängig voneinander einen Aminrest oder einen Rest eines Polyamins, das protoniert oder quaterniert sein kann,

bedeuten, mit der Maßgabe, daß mindestens einer der Reste A oder B für einen solchen Polyaminrest steht, und die genannten Substituenten und die Ringe a durch in der Farbstoffchemie übliche nichtionische, kationische oder anionische Reste substituiert sein können, mit der Maßgabe, daß die Summe der anionischen Gruppen kleiner ist als die Summe der protonierbaren und quaternierbaren Stickstoffatome in A und B, werden zum Färben von mit basischen Farbstoffen färbbaren Substraten, insbesondere Papier und Polyacrylnitril, verwendet.

EP 0 148 390 A2

BAYER AKTIENGESELLSCHAFT 5090 Leverkusen, Bayerwerk
Konzernverwaltung RP
Patentabteilung Mi/AGc

# Basische Triphendioxazinfarbstoffe, ihre Herstellung und Verwendung

Gegenstand der Erfindung sind basische Triphendioxazinfarbstoffe der Formel

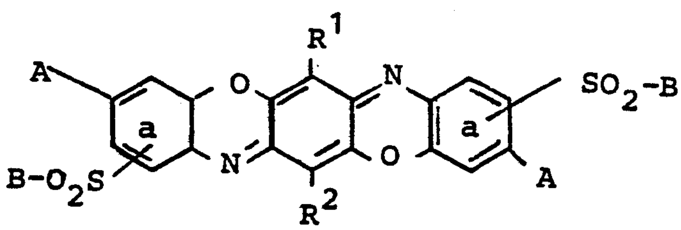

(I)

worin

$R_1$ und $R_2$ unabhängig voneinander Wasserstoff, Halogen, Alkyl, Cyclohexyl, Aryl, Alkoxy, Aryloxy, CN, $CONH_2$, CONH-Alkyl, $CON(Alkyl)_2$, CONH-Aryl, COOAlkyl, NH-CO-Alkyl, NH-CO-Aryl oder NH-Aryl und

A und B unabhängig voneinander einen Aminrest oder einen Rest eines Polyamins, das protoniert oder quaterniert sein kann,

bedeuten, mit der Maßgabe, daß mindestens einer der Reste A oder B für einen solchen Polyaminrest steht, und die genannten Substituenten und die Ringe a durch in der Farbstoffchemie übliche nichtionische, kationische oder anionische Reste substituiert sein können, mit der Maßgabe, daß die Summe der anionischen Gruppen kleiner ist als die Summe der protonierbaren und quaternierbaren Stickstoffatome in A und B,

ihre Herstellung, ihre wäßrigen Lösungen und ihre Verwendung zum Färben von mit basischen Farbstoffen färbbaren Substraten, insbesondere Papier und Polyacrylnitril.

Unter Aminresten A oder B sind vorzugsweise solche der Formel

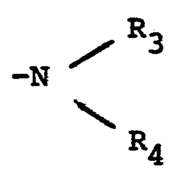

(II)

worin $R_3$ und $R_4$ Wasserstoff, Alkyl, Cycloalkyl oder Aralkyl bedeuten, und

unter gegebenenfalls protonierten oder quaternierten Polyaminresten A oder B solche der Formeln

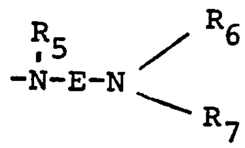

(III)

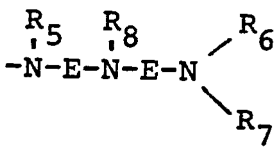

(IV)

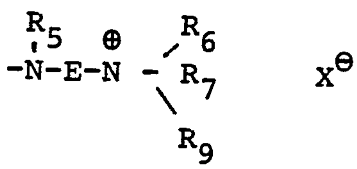

(V)

oder

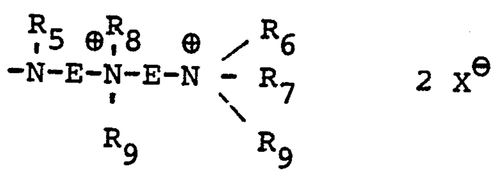

(VI)

worin

$R_5$-$R_8$ Wasserstoff, Alkyl oder Aralkyl und

$R_9$ Wasserstoff, Alkyl oder Aralkyl bedeuten, oder

$R_3$ mit $R_4$, $R_5$ mit $R_6$, $R_5$ oder $R_6$ mit $R_8$, $R_6$ mit $R_7$ oder $R_6$ mit $R_7$ und $R_9$ zu einem Ring geschlossen sind,

E für gegebenenfalls verzweigtes $C_2$-$C_6$-Alkylen, Cyclohexylen, Phenylen oder einen Rest der Formeln

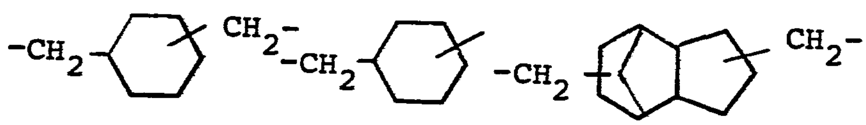 oder

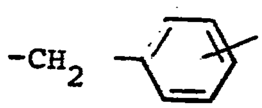 und

$X^{\ominus}$ für ein Anion stehen, und

worin die genannten cyclischen und acyclischen Reste ihrerseits durch in der Farbstoffchemie übliche nichtionische oder kationische Reste substituiert sein können, zu verstehen.

In Formel (I) stehen $R_1$ und $R_2$ vorzugsweise für Halogen und insbesondere für Chlor.

In den Formeln (I)-(VI) ist unter einem Alkylrest vor allem ein Rest mit 1-6 Kohlenstoffatomen zu verstehen.

Aryl bzw. Aralkyl stehen vorzugsweise für Phenyl bzw. Benzyl oder Phenylethyl.

Als nichtionische Substituenten kommen z.B. in Betracht: Halogen, wie Fluor, Chlor oder Brom, Hydroxy, $C_1$-$C_4$-Alkoxy, Cyan, $C_1$-$C_4$-Alkyl oder Amino.

Als kationischer Substituent kommt vor allem die Ammoniumgruppe und als anionischer Rest die Sulfatogruppe in Frage.

Bevorzugt sind jedoch nichtionische und kationische Reste.

Es können die Reste

$R_5$ und $R_6$ zusammen mit -N-E-N-
$R_5$ und $R_8$ zusammen mit -N-E-N- bzw.
$R_6$ und $R_8$ zusammen mit -N-E-N-

einen 5- oder 6-gliedrigen Ring, z.B. einen Piperazin- oder Imidazolidin-Ring bilden.

Die Reste $R_3$ und $R_4$ können zusammen mit N einen 5- oder 6-gliedrigen Ring, z.B. einen Piperidin-, Morpholin-, Piperazin- oder Pyrrolidin-Ring bilden.

Die Reste $R_6$ und $R_7$ bzw. die Reste $R_6$, $R_7$ und $R_9$ können zusammen mit N einen 5- oder 6-gliedrigen Ring, z.B. einen Piperidin, Morpholin-, Piperazin- oder Pyrrolidin- bzw. Pyridin-Ring bilden.

Die genannten Heterocyclen können weitere Substituenten wie $C_1$-$C_4$-Alkylreste oder einen ankondensierten Ring, z.B. einen Benzolring, tragen.

Als Anionen $X^{(-)}$ sind

Chlorid, Bromid, Jodid, Sulfat, Hydrogensulfat, Methylsulfat, Ethylsulfat, Amidosulfat, Perchlorat, Phosphat, Hydroxid, Formiat, Acetat, Propionat, Oxalat, Malonat, Succinat, Maleinat, Chloracetat, Trichloracetat, Methoxyacetat, Ethoxyacetat, Lactat, Citrat, Benzoat, Methansulfonat, Ethansulfonat, Benzolsulfonat, p-Toluolsulfonat und Carbonat besonders zu nennen.

Beispiele für $R_1$ und $R_2$ sind:
Wasserstoff, Chlor, Brom, $C_1$-$C_4$-Alkyl, Phenyl, Chlorphenyl, Methylphenyl, $C_1$-$C_4$-Alkoxy, Acetylamino, Propionylamino, Butyrylamino, Benzoylamino, Methylbenzoylamino, Chlorbenzoylamino; Phenoxy, Chlorphenoxy, Methylphenoxy, Anilinocarbonyl, Toluidinocarbonyl, Chloranilinocarbonyl; Methoxycarbonyl und Ethoxycarbonyl.

Aminreste A oder B der Formel (II) sind außer $NH_2$ zum Beispiel Methylamino, Dimethylamino, Ethylamino, Diethylamino, Propylamino, Dipropylamino, Butylamino, Dibutylamino, 2-Hydroxyethylamino, Bis-(2-hydroxyethyl)-amino, 2-Sulfatoethylamino, N-(2-Hydroxyethyl)-N-methylamino, Methyl-ethylamino, Benzylamino, 2-Phenylethylamino, Morpholino, Piperidino, Pyrrolidino, 2-Sulfatoethylamino, N-Methyl-N-(2-sulfatoethyl)-amino, 2-Methoxy-ethylamino, 2-Ethoxyethylamino.

Als Polyaminreste A oder B der Formeln (III)-(VI) sind zu nennen:

2-Dimethylamino-1-ethylamino, 2-Diethylamino-1-ethylamino, 2-(ß-Hydroxyethylamino)-1-ethylamino, 2-Bis-(3-

hydroxyethyl)-amino-1-ethylamino, N-(2-Dimethylamino-1-ethyl)-N-methylamino, 2-Methylamino-1-ethylamino, N-(2-Ethylamino-1-ethyl)-N-ethylamino, 3-Dimethylamino-1-propylamino, 3-Diethylamino-1-propylamino, 3-Methylamino-1-propylamino, 3-Ethylamino-1-propylamino, 3-(ß-Hydroxyethylamino)-1-propylamino, 3-Bis-(ß-hydroxyethyl)-amino-1-propylamino, 3-(N-Methyl-N-ß-hydroxyethyl)-amino-1-propylamino, 5-Dimethylamino-2-pentylamino, 5-Diethylamino-2-pentylamino, 2-Amino-1-ethylamino, 3-Amino-1-propylamino, 4-Amino-1-butylamino, 5-Amino-1-pentylamino, 6-Amino-1-hexylamino, 3-Amino-2-hydroxy-1-propylamino, 2-(N-Morpholino)-1-ethylamino, 2-(N-Piperazinyl)-1-ethylamino bzw. N-(N'-2-Aminoethyl)-piperazino, 2-[N-(N'-Methyl)-piperazinyl]-1-ethylamino, 2-(N-Piperidinyl)-1-ethylamino, 3-(N-Piperazinyl)-1-propyl-amino, bzw. N-(N'-3-Aminopropyl)-piperazino, 3-[N-(N'-Methyl)piperazinyl]-1-propylamino, 3-(N-Morpholino)-1-propylamino, Piperazinyl, N-Methyl-N'-piperazinyl, N-Ethyl-N'-piperazinyl, 3-(N-Piperidinyl)-1-ethylamino, 3-(N-Pyrrolidinyl)-1-propylamino, 2-(N-Pyrrolidinyl)-1-ethylamino, N-(ß-Hydroxyethyl)-N'-piperazinyl, 4-Amino-1-cyclohexylamino, 3-Amino-1-cyclohexylamino, 4-, 3-, 2-Dimethylamino-phenylamino, 4-(ß-Diethylaminoethoxy)-phenylamino, 4-N-(3'-Dimethylamino-1'-propylamino)-phenylamino, 4-N-(2'-Dimethylamino-1'-ethylamino)-phenylamino, 3-(N-Methyl-N-γ-aminopropyl)-1-propylamino, ferner die Reste von Diethylentriamin, Triethylentetramin, Tetraethylenpentamin, Pentaethylenhexamin, Dipropylentriamin, Tripropylentetramin, und die Reste

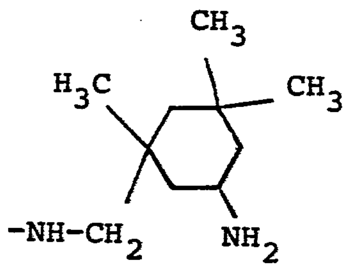

bzw.

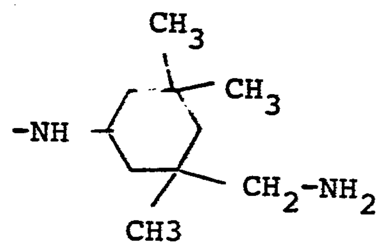

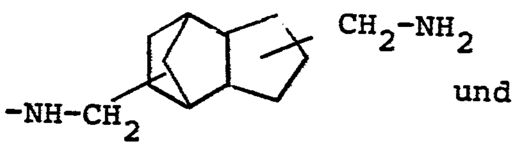

und

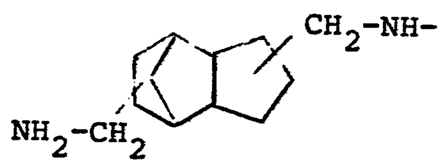

sowie die Ammoniumsalze dieser Amine, die als vierten Rest am Stickstoff beispielsweiese eine $C_1$-$C_4$-Alkylgruppe, Hydroxyethyl, Hydroxypropyl, Dihydroxypropyl, Methoxycarbonylethyl, Methoxycarbonylmethyl oder Benzyl tragen.

Von den Farbstoffen der Formel (I) sind die der

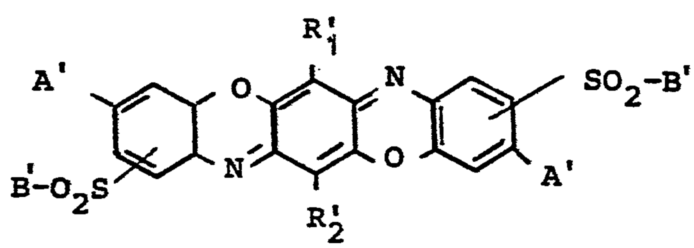

(VII)

bevorzugt, worin

$R_1'$ und $R_2'$ Wasserstoff oder Halogen,
A' und B' einen Rest der Formeln

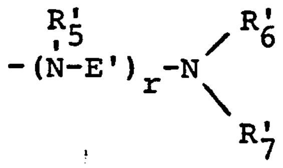

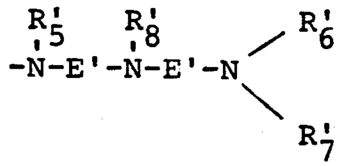

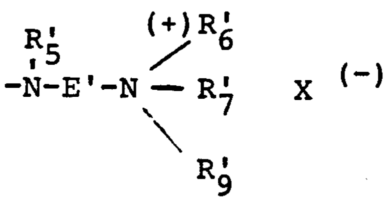

oder

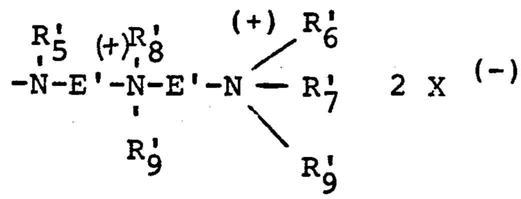

r 0 oder 1,

$R_5'$-$R_9'$ Wasserstoff, gegebenenfalls durch Hydroxy, $C_1$-$C_4$-Alkoxy, Halogen, Cyan, $C_1$-$C_4$-Alkoxycarbonyl oder $C_1$-$C_4$-Alkylcarbonyl substituiertes $C_1$-$C_4$-Alkyl,

$R_9'$ außderdem gegebenenfalls durch $C_1$-$C_4$-Alkyl, Hydroxy, $C_1$-$C_4$-Alkoxy oder Halogen substituiertes Benzyl oder Phenylethyl und

E' $C_2$-$C_6$-Alkylen, Cyclohexylen, Phenylen oder einen Rest der Formeln

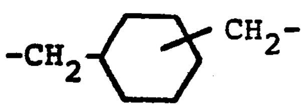

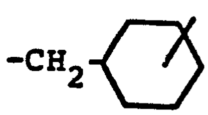

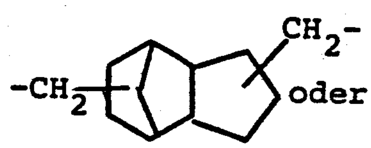

oder

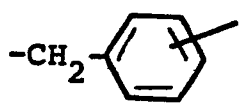

wobei die Sechsringe durch $C_1$-$C_4$-Alkyl substituiert sein können, bedeuten, oder

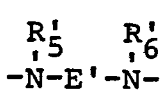

oder

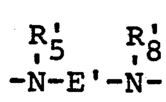

oder

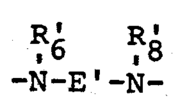

einen gegebenenfalls durch $C_1$-$C_4$-alkyl substituierten Piperazin- oder Imidazolidin-Ring darstellen, oder

$R'_7$-N-$R'_9$ einen gegebenenfalls durch $C_1$-$C_4$-Alkyl substituierten Piperidin-, Morpholin-, Piperazin- oder Pyrrolidin-Ring oder

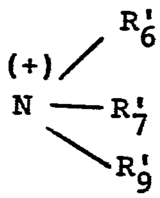 einen gegebenenfalls durch $C_1$-$C_4$-Alkyl substituierten Pyridinium-Rest und

$X^{(-)}$ ein Anion darstellen, und mindestens einer der Reste A' und B' für einen der genannten gegebenenfalls protonierten oder quaternierten Polyaminreste steht.

Von den Farbstoffen der Formel (I) sind solche der Formel

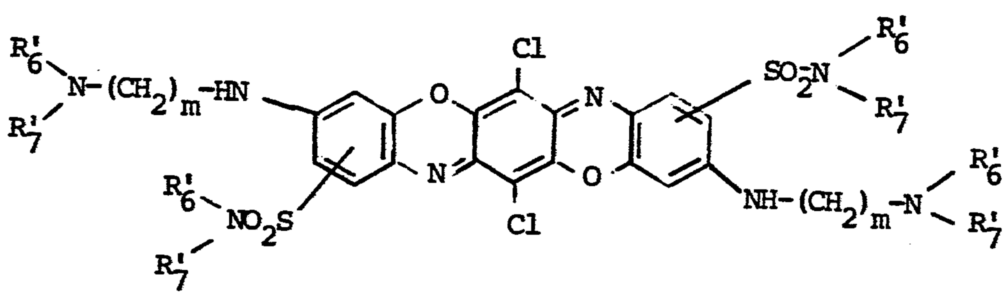

(VIII)

und deren protonierte und quaternierte Form

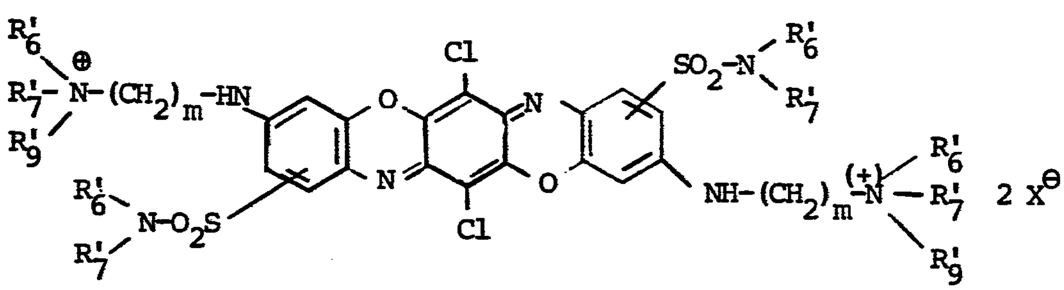

(IX)

besonders bevorzugt, worin $R_6'$, $R_7'$, $R_9'$, m und $X^\ominus$ die oben angegebene Bedeutung haben und m 2 - 4 bedeutet.

Weiterhin bevorzugte Farbstoffe der Formel (I) sind solche der Formel

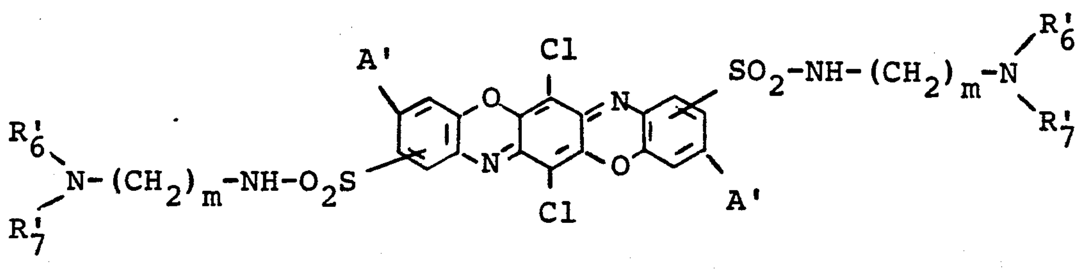

(X)

und deren protonierte oder quaternierte Form

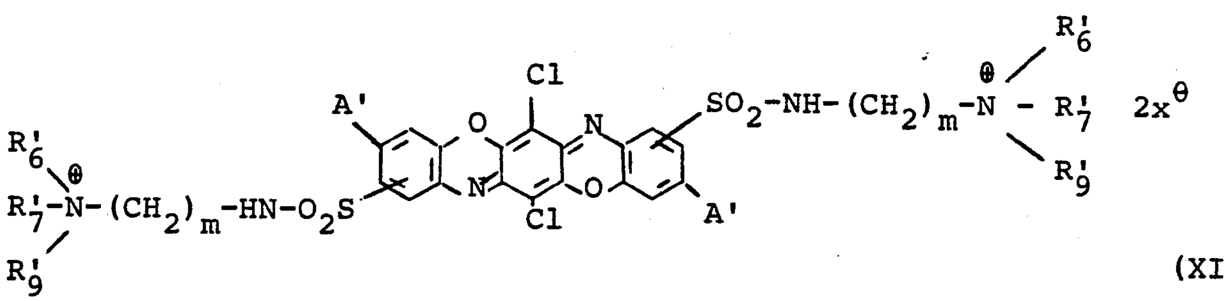

(XI)

worin $R_6'$, $R_7'$, $R_9'$, m und $X^\ominus$ die oben angegebene Bedeutung haben und

A' Amino, $C_1$-$C_4$-Alkylamino oder Cyclohexylamino ist.

Von den Farbstoffen der Formeln (VIII)-(XI) sind wiederum solche besonders zu nennen mit

$R_6'$, $R_7'$ = $C_1$-$C_4$-Alkyl,
$R_9'$ = Wasserstoff, $C_1$-$C_4$-Alkyl oder Benzyl oder

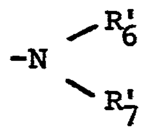 = 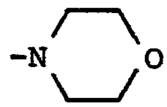 oder 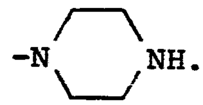

Die Herstellung von Verbindungen der Formel (I) erfolgt durch Kondensation von 1,4-Benzochinonen der Formel

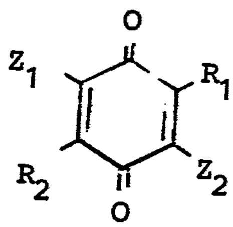 (XII)

worin

$R_1$, $R_2$ die oben angegebene Bedeutung haben und
$Z_1$ und $Z_2$ Wasserstoff, Cl, Br, OAlkyl oder O-Aryl bedeuten,

mit 5-Aminobenzolsulfonamiden der Formel

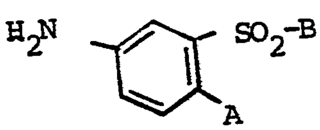 (XIII)

worin A und B die oben angegebene Bedeutung haben,

zu Verbindungen der Formel

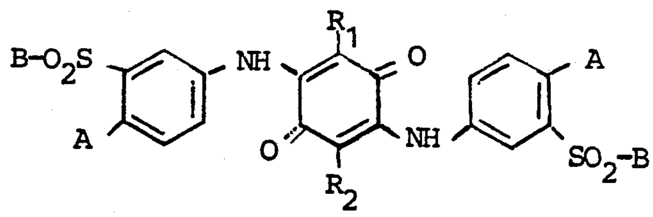

(XIV)

und nachfolgenden Ringschluß der Verbindungen (XIV) zu Verbindungen der Formel (I) und gegebenenfalls Umwandlung in die quartären Ammoniumsalze durch Lösen in verdünnten Säuren oder Einwirkung von Quaternierungsmittel.

Die Kondensation der Benzochinone der Formel (XII) mit den Aminobenzol-sulfonamiden der Formel (XIII) erfolgt am besten in wäßrigem oder wäßrig-organischem Medium unter Zugabe alkalischer Kondensationsmittel bei pH-Werten von 3-11, vorzugsweise 4-8, und Temperaturen von 20-90°C, vorzugsweise 40-70° oder in gepufferten Lösungen, die obige alkalische Kondensationsmittel enthalten. Man kann auch in rein organischem Milieu unter Zusatz säurebindender Mittel arbeiten.

Alkalische Kondensationsmittel sind beispielsweise Natriumhydrogencarbonat, Natriumcarbonat, Natrium- oder Kaliumacetat, Natronlauge, Kalilauge, Natriumphosphate, Natriumborat.

Im allgemeinen fallen die Kondensationsprodukte der Formel (XIV) als schwerlösliche, braune Produkte aus.

Die eingesetzten 2-Alkylamino- bzw. 2-Polyamino-5-aminobenzolsulfonamide der Formel (XIII) sind erhältlich durch stufenweise Kondensation von 2-Chlor-5-nitrobenzolsulfochlorid mit Ammoniak, Alkylaminen oder Polyaminen und anschließende katalytische Reduktion der Nitrogruppe.

Eine Variante zur Herstellung von Verbindungen der Formel (XIV) besteht in der Addition von Aminobenzolsulfonamiden der Formel (XIII) an 1,4-Benzochinone der Formel

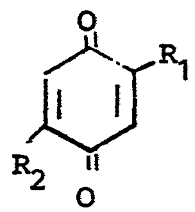

(XV)

worin $R_1$ und $R_2$ die oben angegebene Bedeutung haben, und der Oxidation der primär entstehenden Addukte.

Der Ringschluß der Kondensationsprodukte der Formel (XIV) zu den Triphendioxazinen (I) kann in hochsiedenden organischen Lösungsmitteln wie Nitrobenzol, Trichlorbenzol, Dichlorbenzol, Chlornaphthalin, Chinolin gegebenenfalls unter Zusatz von Kondensations- bzw. Oxidationsmitteln wie Säurehalogeniden, Eisen(III)-chlorid, Dinitrophenolen und organischen Peroxiden durchgeführt werden. Besonders günstig verläuft die Ringschlußreaktion bei Temperaturen von 20-70°C in Chlorsulfonsäure, Schwefelsäure und vor allem Oleum gegebenenfalls unter Zusatz von Oxydationsmitteln wie Braunstein, Kaliumperoxidisulfat oder Nitrobenzolsulfonsäure.

Eine gegebenenfalls gewünschte Quaternierung der erhaltenen Farbbasen der Formel (I) kann in bekannter Weise in inerten aprotischen Lösungsmitteln oder in wäßrigem oder wäßrig-organischem Medium bei Temperaturen von 0-100° mit üblichen Quaternierungsmitteln durchgeführt werden. Dabei ist im wäßrigem Medium eine pH-Kontrolle erforderlich. Man arbeitet bei pH-Werten von 6-12, vorzugsweise bei 7-11.

Geeignete übliche Quaternierungsmittel sind beispielsweise Dimethylsulfat, Diethylsulfat, Methylchlorid, Ethylchlorid, Propylchlorid, Butylchlorid, Methylbromid- oder jodid, Ethylbromid- oder jodid, Propylbromid, Butylbromid, Benzylchlorid, Bromessigsäuremethylester, Chlorpropionsäuremethyl- oder -ethylester, Brompropionsäuremethyl- oder -ethylester, Ethylenoxid, Propylenoxid, Epichlorhydrin, Benzolsulfonsäuremethylester, p-Toluolsulfonsäuremethylester und -ethylester.

Geeignete Benzochinone der Formel (XII) sind beispielsweise:

2,3,5,6-Tetrachlor-1,4-benzochinon,
2,3,5,6-Tetrabrom-1,4-benzochinon,
2,5-Dichlor-3,6-dimethyl-1,4-benzochinon,
2,5-Dichlor-3,6-dimethyl-1,4-benzochinon,

2-Methyl-3,5,6-trichlor-1,4-benzochinon,
2-Methyl-3,5,6-tribrom-1,4-benzochinon,
2,5-Dichlor-1,4-benzochinon-3,6-dicarbonsäureamid,
2,5-Dibrom-1,4-benzochinon-3,6-dicarbonsäureamid,
2,5-Dichlor-1,4-benzochinon-3,6-dicarbonsäure-N-(phenylamid),
2,5-Dibrom-1,4-benzochinon-3,6-dicarbonsäure-N-(4-methoxyphenylamid),
2,5-Dichlor-1,4-benzochinon-3,6-dicarbonsäure-N-(4-chlorphenylamid),
2,5-Dibrom-1,4-benzochinon-3,6-dicarbonsäure-N-(methylamid),
2,5-Dichlor-1,4-benzochinon-3,6-dicarbonsäure-N,N-(dimethylamid),
2,5-Dichlor-1,4-benzochinon-3,6-dicarbonsäure-N-(ethylamid),
2,5-Diacetylamino-3,6-dichlorbenzochinon,
2,5-Dibenzoylamino-3,6-dichlorbenzochinon,
2,5-Dimethyl-3-chlor-1,4-benzochinon,
2-(4'-Chlorphenyl)-3,5,6-trichlor-1,4-benzochinon,
2,3,5,6-Tetraphenoxy-1,4-benzochinon,
2,3,5,6-Tetra-(4'-methylphenoxy)-1,4-benzochinon,
2,3,5,6-Tetra-(4'-methoxyphenyl)-1,4-benzochinon,
2,3,5,6-Tetra-(4'-chlorphenoxy)-1,4-benzochinon.

Geeignete Chinone der Formel (XV) sind beispielsweise:

1,4-Benzochinon,
2,5-Dimethyl-1,4-benzochinon,
2-Methyl-1,4-benzochinon,
2-Chlor-5-methyl-1,4-benzochinon,
2-Ethyl-1,4-benzochinon,
2-n-Propyl-1,4-benzochinon,
2-Cyclohexyl-1,4-benzochinon,
2-Phenyl-1,4-benzochinon,
2-(4'-Methylphenyl)-1,4-benzochinon.

Zur Kondensation mit den 1,4-Benzochinonen geeignete Aminobenzolsulfonamide der Formel (XIII) sind beispielsweise:

5-Amino-2-methylamino-benzolsulfonsäure-N-(3-dimethylamino-1-propylamid),
5-Amino-2-ethylamino-benzolsulfonsäure-N-(3-dimethylamino-1-propylamid),
5-Amino-2-n-propylamino-benzolsulfonsäure-N-(3-dimethylamino-1-propylamid),
5-Amino-2-isopropylamino-benzolsulfonsäure-N-(3-dimethylamino-1-n-butylamid),
5-Amino-2-cyclohexylamino-benzolsulfonsäure-N-(3-dimethylamino-1-propylamid),
5-Amino-2-dimethylaminobenzolsulfonsäure-N-(3-dimethylamino-1-propylamid),
5-Amino-2-morpholino-benzolsulfonsäure-N-(3-dimethylamino-1-propylamid,
5-Amino-2-methylamino-benzolsulfonsäure-N-(2-diethyl-

amino-ethylamid),

5-Amino-2-methylamino-benzolsulfonsäure-N-(2-dimethylamino-ethylamid),

5-Amino-2-ethylamino-benzolsulfonsäure-N-(3-diethylamino-1-propylamid),

5-Amino-2-ethylamino-benzolsulfonsäure-N-(2-diethyl-amino-ethylamid),

5-Amino-2-methylamino-benzolsulfonsäure-N-(3-N'-morpholino-1-propylamid),

5-Amino-2-n-propylamino-benzolsulfonsäure-N-(3-N'-piperi-dyl-1-propylamid),

5-Amino-2-methylamino-benzolsulfonsäure-N-(3-N"-methyl-N'-piperazino-1-propylamid),

5-Amino-2-ethylamino-benzolsulfonsäure-N-/3- bis-(ß-hydroxyethyl-amino-)-1-propylamid/,

5-Amino-2-ethylamino-benzolsulfonsäure-N-(3-propyl-amino-1-propylamid),

5-Amino-2-sec.-butylamino-benzolsulfonsäure-N-(3-methylethylamino-1-propylamid),

5-Amino-2-methylamino-benzolsulfonsäure-N-(N'-methyl-piperazid),

5-Amino-2-ethylamino-benzolsulfonsäure-N-(3-methylamino-1-propylamid),

5-Amino-2-methylamino-benzolsulfonsäure-N-/3-(N'-methyl-N'-ß-hydroxyethyl)-amino-1-propylamid/,

5-Amino-2-isobutylamino-benzolsulfonsäure-N-(4-amino-1-butylamid),

2,5-Diamino-benzolsulfonsäure-N-(3-dimethylamino-1-propylamid),
2,5-Diamino-benzolsulfonsäure-N-(2-diethylamino-ethylamid),
2-Amino-5-(2-methoxyethylamino)-benzolsulfonsäure-N-(3-dibutylamino-1-propylamid),
5-Amino-2-(3-dimethylamino-1-propylamino)-benzolsulfonsäure-N,N-dimethylamid,
5-Amino-2-(3-dimethylamino-1-propylamino)-benzolsulfonsäure-N,N-diethylamid,
5-Amino-2-(3-dimethylamino-1-propylamino)-benzolsulfonsäureamid,
5-Amino-2-(2-dimethylamino-1-ethylamino)-benzolsulfonsäure-N-phenylamid,
5-Amino-2-(3-N-morpholino-1-propylamino)-benzolsulfonsäure-N,N-dimethylamid,
5-Amino-2-(3-dimethylamino-1-propylamino)-benzol-sulfonsäure-N-methylamid,
5-Amino-2-(3-diethylamino-1-propylamino)-benzolsulfonsäure-N-(N'-methylpiperazid),
5-Amino-2-(3-dimethylamino-1-propylamino)-benzolsulfonsäure-N-(3-dimethylamino-1-propylamid),
5-Amino-2-(3-methylethylamino-1-propylamino)-benzolsulfonsäure-N-morpholid,
5-Amino-2-(3-N-methyl-N-benzylamino-1-propylamino)-benzolsulfonsäure-N-ß-hydroxyethylamid,
5-Amino-2-(3-dimethylamino-1-propylamino)-benzolsulfonsäure-N,N-bis-(ß-hydroxyethylamid),
5-Amino-2-(4-dimethylamino-1-butylamino)-benzolsulfonsäure-N-ß-methoxyethylamid,

5-Amino-2-cyanoethylamino-benzolsulfonsäure-N-(3-methyl-propylamino-1-propylamid),
5-Amino-2-carboxyethylamino-benzolsulfonsäure-N-(3-dimethylamino-1-butylamid),
5-Amino-2-sulfoethylamino-benzolsulfonsäure-N-(2-dimethylaminoethylamid),
5-Amino-2-ethylamino-benzolsulfonsäure-N-(4-diethylamino-2-butylamid),
5-Amino-2-methylamino-benzolsulfonsäure-N-methyl-N-(2-dimethylamino-ethyl)-amid,
5-Amino-2-ethylamino-benzolsulfonsäure-N-ethyl-N-(2-diethylaminoethyl)-amid,
5-Amino-2-methylamino-benzolsulfonsäure-N-(3-N'-methyl-N'-hydroxyethyl-1-propylamid),
5-Amino-2-ethylamino-benzolsulfonsäure-N-(3-N'-morpholino-1-propylamid),
2,5-Diaminobenzolsulfonsäure-N-(3-N'-morpholino-1-propylamid),
5-Amino-2-N-morpholino-benzolsulfonsäure-N-(3-N'-morpholino-1-propylamid),
5-Amino-2-(3-N-morpholino-1-propylamino)-benzolsulfonsäure-amid,
5-Amino-2-(3-N-morpholino-1-propylamino)-benzolsulfonsäure-N-morpholid,
5-Amino-2-(3-N-morpholino-1-propylamino)-benzolsulfonsäure-N,N-diethylamid,
5-Amino-2-(3-N-morpholino-1-propylamino)-benzolsulfonsäure-N-methylamid,
5-Amino-2-(3-N-morpholino-1-propylamino)-benzolsulfonsäure-N(N'-methyl)-piperazid,
5-Amino-2-(3-N-morpholino-1-propylamino)-benzolsulfonsäure-N-(3-N'-morpholino-1-propylamid),

5-Amino-2-(2-N-piperazino-1-ethylamino)-benzolsulfonsäure-N-morpholid,
5-Amino-2-N-(N'-2-aminoethyl)-piperazino-benzolsulfonsäure-N-morpholid,
5-Amino-2-(2-N-piperazino-1-ethylamino)-benzolsulfonsäure-dimethylamid,
5-Amino-2-N-(N'-2-aminoethyl)-piperazino-benzolsulfonsäure-amid,
5-Amino-2-(3-dimethylamino-1-propylamino)-benzolsulfonsäure-N-morpholid,
5-Amino-2-[3-N-methyl-N-(3-aminopropyl)-1-propylamino]-benzolsulfonsäure-diethylamid,
5-Amino-2-methylaminobenzolsulfonsäure-N-[3-N'-methyl-N'-(3-aminopropyl)-1-propylamid],
5-Amino-2-(3-diethylamino-1-propylamino)-benzolsulfonsäure-N-3-ethoxy-1-propylamid,
5-Amino-2-(3-dimethylamino-1-propylamino)-benzolsulfonsäure-N-ß-sulfoethylamid,
5-Amino-2-(2-diethylamino-1-ethylamino)-benzolsulfonsäureamid,
5-Amino-2-[3-(bis-ß-hydroxyethylamino)-1-propylamino]-benzolsulfonsäureamid,
5-Amino-2-(3-diethylamino-1-propylamino)-benzolsulfonsäure-N-methylamid.

Die neuen basischen Farbstoffe können in protonierter oder quaternisierter Form als gut wasserlösliche Produkte aus wäßriger Lösung zum Färben von verschiedensten Materialien wie Cellulosematerialien, Polyacrylnitril,

sauer modifiziertem Polyamid und Polyester, Wolle und Leder Verwendung finden.

Hervorragend geeignet sind die erfindungsgemäßen Farbstoffe vor allem zu Färben von verschiedensten Papierarten in klaren blauen Tönen.

Beim Färben werden hohe Ausziehgrade erreicht, erkenntlich an der geringen Abwasserbelastung mit Farbstoff. Die Färbungen weisen gute Naß- und Lichtechtheiten auf. Sie sind gegen Einwirkung von Wasser, Alkoholen, Seifen und wäßrigen organischen Säuren sehr beständig.

Die in den Beispielen angegebenen Farbkennzahlen beziehen sich auf Color Index Hue Indication Chart (Indicator Numbers).

Beispiel 1

A. 67,0 g 1-(2'-Diethylaminosulfonyl-4'-nitrophenyl)-amino-3-dimethylaminopropan-hydrochlorid werden in 400 ml Wasser und 80 ml Methanol bei 25-45°C im Autoklaven unter Zusatz von 10 g Raney-Nickel unter 20-80 Atmosphären Wasserstoff katalytisch reduziert. Man klärt die erhaltene Lösung vom Nickel, wäscht das Nickel mit 50 ml heißem Wasser und stellt in den vereinigten Filtraten den pH-Wert mit Salzsäure auf 6,5 und die Temperatur auf 50°C.

20,0 g gemahlenes 2,3,5,6-Tetrachlorchinon werden in 75 ml Methanol angerührt und dann zu obiger Lösung gesetzt. Durch Zutropfen von 2n Sodalösung hält man im Reaktionsgemisch den pH-Wert auf 6,0-6,5. Nach etwa 2 Stunden ist die Reaktion im wesentlichen abgeschlossen, und der Sodaverbrauch kommt allmählich zum Stillstand. Die braune Fällung des Reaktionsproduktes der Formel

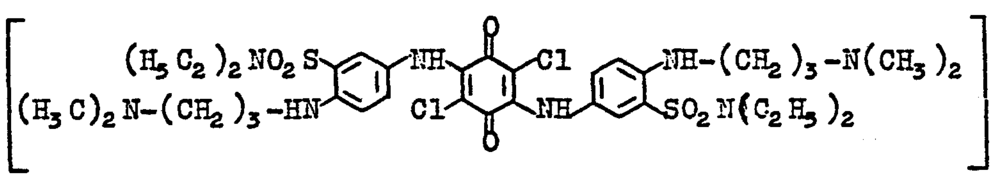 . 2 HCl

wird abgesaugt, mit 1 ltr. 10 %iger Natriumchloridlösung gewaschen und bei 60°C im Umluftschrank getrocknet.

Die eingangs eingesetzte Nitroverbindung erhält man durch Kondensation von 2-Chlor-5-nitrobenzol-sulfochlorid mit 20 %igem wäßrigem Diethylamin bei 20°C und anschließenden Austausch des 2-ständigen Chloratoms in 1-Amino-3-dimethylaminopropan bei 70°C.

B. 33,0 g des Kondensationsproduktes aus Beispiel 1A werden bei 20°C in 180 ml 20 %iges Oleum in etwa 2 Stunden allmählich eingetragen. Man rührt zur vollständigen Lösung noch 30-60 Minuten nach und trägt dann 19,8 g Kaliumperoxidisulfat ($K_2S_2O_8$) innerhalb von 30 Minuten kontinuierlich ein. Durch leichte Kühlung wird die Temperatur auf 25-28°C gehalten. Es tritt Farbveränderung der Lösung von braun nach blau ein. Man rührt bei dieser Temperatur noch 1-2 Stunden weiter, bis eine chromatographische Probe das völlige Verschwinden des Ausgangsmaterials und keine weitere Veränderung mehr anzeigt.

Man gibt den Ansatz auf 1300 g Eis, verdünnt dann mit 2,4 ltr. 25 %iger Natriumchloridlösung, saugt die Fällung ab und entfernt anhaftende Schwefelsäure durch Waschen mit 25 %iger Natriumchloridlösung. Der erhaltene blaue Farbstoff kann als Salz der Base

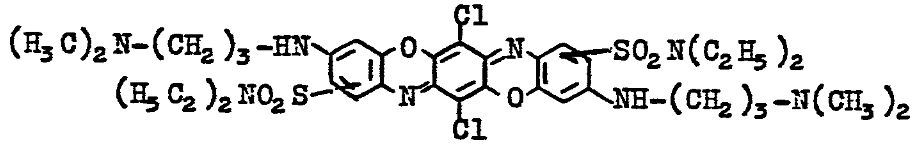

getrocknet und für färberische Zwecke, z.B. zum Färben von Polyacrylnitril, eingesetzt werden.

Zur Herstellung der freien Base suspendiert man das Farbsalz in 500 ml Wasser, stellt den pH-Wert mit Natronlauge auf 12,6, saugt ab, wäscht mit zunächst 10 %iger Natriumchloridlösung und anschließend mit Wasser praktisch chloridfrei. Man erhält nach Trocknen etwa 26 Teile der freien Base, die sich in verdünnter Essigsäure mit klarem rotstichigem Blauton löst.

C. 10,0 g der erhaltenen Farbbase werden in 60 ml Nitrobenzol bei 60°C gelöst; man läßt in 15 Minuten 3,8 g Dimethylsulfat zutropfen und rührt noch 30 Minuten nach. Man kühlt die Suspension des erhaltenen quartären Salzes der Formel

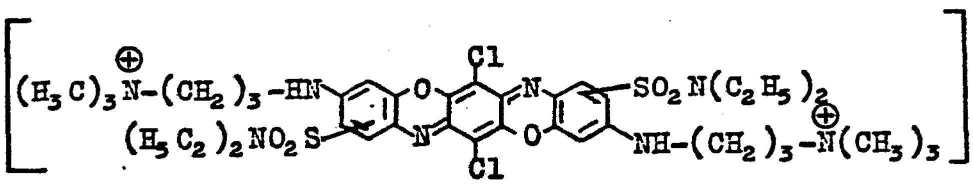 2 $CH_3SO_4^{\ominus}$

$\lambda_{max}$ = 611 nm in 5 %iger Essigsäure

auf 20°C ab, saugt den Niederschlag ab, wäscht den Filterkuchen mit Chlorbenzol und Toluol und trocknet ihn. Man erhält 11,7 g Farbstoff in quaternierter Form.

D. Eine Variante zur Überführung der im Abschnitt B erhaltenen Farbbase in das quartäre Salz besteht in folgender Verfahrensweise:

10,0 g der Farbbase werden in 50 ml N-Methylpyrrolidon gelöst bzw. suspendiert. Nach Zutropfen von 3,0 g Dimethylsulfat bei 60° tritt vollständige Lösung unter Quartärsalzbildung ein. Man tropft zu der erhaltenen Lösung 500 ml 20 %ige Natriumchloridlösung, rührt einige Stunden zur vollständigen Abscheidung nach, saugt ab und wäscht den Filterkuchen mit 10 %iger und zum Schluß mit 2 %iger Natriumchloridlösung. Das erhaltene quartäre Salz wird bei 60°C im Umluftschrank getrocknet.

Klare blaue Papierfärbungen (C.I. Indicator Number 14) werden erhalten, wenn man eine Lösung des quartären Salzes in 5 %iger Essigsäure zu einer Suspension von gebleichtem Zellstoff setzt, 15 Minuten bei 20° verrührt und mit der gefärbten Masse auf einem Blattbildner Papierblätter herstellt, wobei ein hoher Ausziehgrad erreicht wird, oder wenn man vorgefertigte Blätter mit einer Lösung des quartären Salzes besprüht.

<u>Beispiel 2</u>

Setzt man im Beispiel 1 an Stelle des 1-(2'-Diethylaminosulfonyl-4'-nitrophenyl)-amino-3-dimethylaminopropan-hydrochlorids 59,9 g 1-(2'-Methyl-aminosulfonyl-4'-nitrophenyl)-amino-3-dimethylaminopropan-hydrochlorid ein, reduziert die Nitrogruppe, kondensiert die erhaltene Aminoverbindung mit Tetrachlorchinon, unterwirft das Kondensationsprodukt einem Ringschluß zum entsprechenden Triphendioxazin in Oleum und quaternisiert in diesem die tertiären Aminogruppen nach der im Beispiel 1 beschriebenen Weise, so erhält man einen Farbstoff der Formel

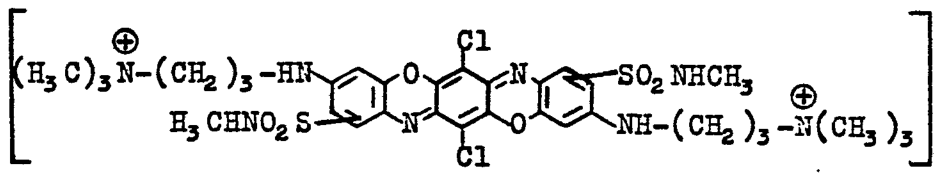 2 $CH_3SO_4^{\ominus}$

$\lambda_{max}$ = 615 nm in 5 %iger Essigsäure

der Papier ebenfalls in klaren Blautönen mit guten Naßechtheiten färbt (C.I. Indicator Number 14).

Beispiel 3

Setzt man in Beispiel 1 an Stelle des 1-(2'-Diethylaminosulfonyl-4'-nitrophenyl)-amino-3-dimethylaminopropan-hydrochlorids 65,0 g 1-(2'-Methylaminosulfonyl-4'-nitrophenyl)-amino-3-diethylaminopropan-hydrochlorid ein und verfährt im übrigen wie dort beschrieben, so erhält man einen Farbstoff der Formel

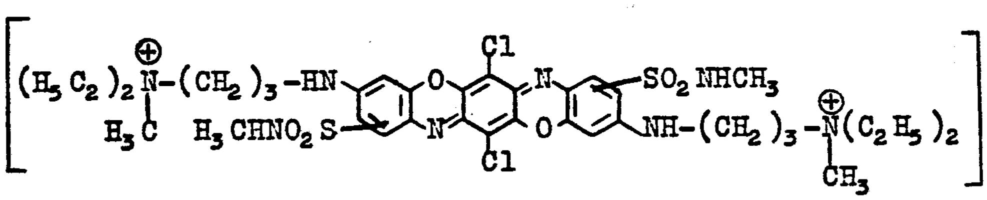 2 $CH_3SO_4^{\ominus}$

$\lambda_{max}$ = 615 nm in 5 %iger Essigsäure

der sich ebenfalls vorzüglich zum Färben von Papier und Polyacrylnitril in klaren Blautönen eignet (C.I. Indicator Number 14).

Beispiel 4

Ersetzt man im Beispiel 1 das 1-(2'-Diethylaminosulfonyl-4'-nitrophenyl)-amino-3-dimethylaminopropan-hydrochlorid durch 57,5 g 1-(2'-Aminosulfonyl-4'-nitrophenyl)-amino-3-dimethylaminopropan-hydrochlorid und verfährt im übrigen nach den Angaben des Beispiels 1, so erhält man einen Farbstoff der Formel

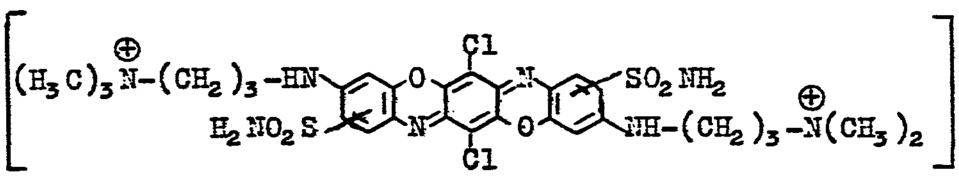 2 $CH_3SO_4^{\ominus}$

$\lambda_{max}$ = 616 nm in 5 %iger Essigsäure

der Papier und Polyacrylnitril in klaren Blautönen färbt (C.I. Indicator Number 14).

Beispiel 5

A. 54,3 g 2-Ethylamino-5-nitro-benzolsulfonsäure-(3-dimethylamino-1-propylamid)-hydrochlorid werden in 400 ml Wasser und 70 ml Methanol bei 30-50°C im Autoklaven unter Zusatz von 10 g Raney-Nickel katalytisch reduziert. Man klärt die erhaltene Lösung vom Nickel, wäscht das Nickel mit 50 ml heißem Wasser und stellt in den vereinigten Filtraten die Temperatur auf 50°C und den pH-Wert auf 6,5 ein.

16,9 g gemahlenes 2,3,5,6-Tetrachlorchinon werden in 50 ml Ethanol angerührt. Man gibt die Suspension in einem Guß zu obiger Lösung bei 50° zu und hält den pH-Wert im Reaktionsgemisch durch Zutropfen von 2n Sodalösung auf 6,0-6,5. Nach Ende der Reaktion, das am Aufhören des Sodaverbrauchs erkennbar ist, läßt man nach etwa 2 bis 3 Stunden das Reaktionsgemisch unter Rühren abkühlen. Man saugt das in braunen Nadeln ausgefallene Kondensationsprodukt der Formel

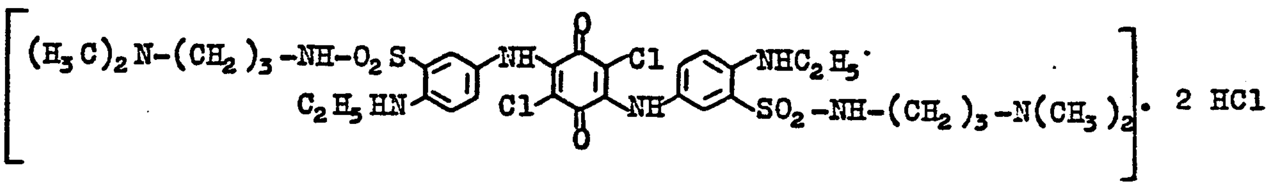

ab, wäscht es mit 750 ml 10 %iger und 300 ml 5 %iger Natriumchloridlösung und trocknet es bei 60° im Umluftschrank.

Die zu Anfang eingesetzte Nitroverbindung erhält man durch Kondensation von 2-Chlor-5-nitrobenzolsulfonsäurechlorid mit 20-25 %igem wäßrigem 1-Amino-3-dimethylaminopropan bei 20° und nachfolgendem Austausch des 2-ständigen Chloratoms gegen den Ethylaminrest in einer 10-15 %igen wäßrigen Lösung des Amins bei 80°C.

B. 28,6 g des Tetrachlorchinon-Kondensationsproduktes aus Beispiel 5A werden in 150 ml 20 %iges Oleum allmählich bei 20° eingetragen. Nach 30-60 Minuten Nachrührzeit ist vollständige Lösung eingetreten.

Man trägt nun bei 25°C 18,3 g Kaliumperoxidisulfat im Laufe von 30 Minuten kontinuierlich ein und hält durch gelegentliche Kühlung die Temperatur zwischen 25 und 28°C. Die Lösungsfarbe wechselt allmählich von braun nach blau. Wenn die Reaktion nach 1-2 Stunden beendet ist, gibt man auf 1100 g Eis, setzt 2,5 l 25 %ige Natriumchloridlösung zu und rührt die Suspension einige Stunden weiter. Man saugt ab und wäscht den Farbstoff mit gesättigter Natriumchloridlösung schwefelsäurefrei. Der erhaltene blaue Farbstoff ist das Salz der Farbbase

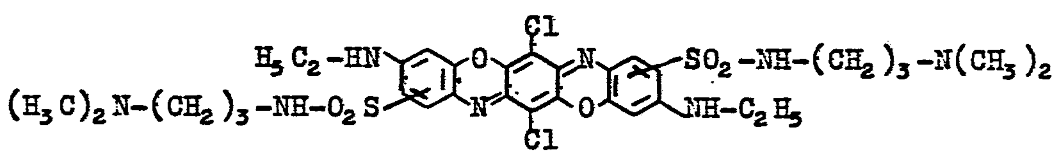

Er kann in dieser Form getrocknet und für färberische Zwecke wie das Färben von Papier, Polyacrylnitril oder Cellulosefasern eingesetzt werden.

Zur Herstellung der freien Base suspendiert man das Farbsalz in 500 ml Wasser, stellt mit Natronlauge auf pH 12,5, versetzt die Suspension mit 60 g Natriumchlorid, rührt nach, saugt den Niederschlag ab und wäscht den Kuchen zunächst mit 10 %iger Natriumchloridlösung, zum Schluß mit Wasser und trocknet ihn. Die Farbbase ist in verdünnter Essigsäure mit klarem, rotstichigem Blauton löslich.

C. 10,0 g Farbbase des Beispiels 5B werden in 60 ml N-Methylpyrrolidon suspendiert. Man läßt bei 55°C 3,9 g Dimethylsulfat in 15 Minuten zutropfen und hält noch 30-60 Minuten auf 55°C. Man kühlt die Suspension des ausgefallenen quartären Salzes auf 5° ab, saugt den Niederschlag ab und wäscht ihn mit Chlorbenzol, bis der Ablauf hell wird, und anschließend mit Petrolether. Nach Trocknung bei 60°C im Umluftschrank erhält man etwa 12 Teile des quartären Salzes der Formel:

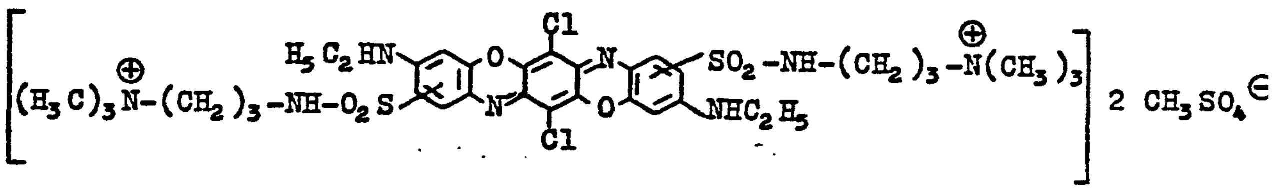

$\lambda_{max}$ = 584 nm, ~ 620 nm in 5 %iger Essigsäure.

Außer zum Färben von Papier ist der Farbstoff in dieser Form auch geeignet zum Färben von Polyacrylnitril und Cellulosegewebe (C.I. Indicator Number 14).

D. Eine Variante zur Herstellung des quartären Salzes besteht in folgender Verfahrensweise:

10,0 g Farbbase des Abschnitts B werden in Form des dort angefallenen Salzes in 150 ml Wasser gelöst bzw. suspendiert. Man setzt 0,3 ml eines Emulgators

(auf der Basis von Laurylalkohol und Ethylenoxid) zu und stellt den pH-Wert auf 8,5. Man läßt nun bei 25°C 4,5 g Dimethylsulfat zutropfen und hält den pH-Wert mit 1n Natronlauge auf 8,5-9,0. Nach 2 Stunden steigert man die Temperatur auf 60-70°C und hält weiter obigen pH-Wert ein. Nach Abkühlung wird der Farbstoff entweder durch Aussalzen isoliert oder die Lösung direkt im Rotationsverdampfer unter Vakuum eingedampft.

Beispiel 6

Wird im Beispiel 5 das 2-Ethylamino-5-nitrobenzol-sulfonsäure-(3-dimethylamino-1-propylamid)-hydrochlorid durch 56,4 g 2-Methylamino-5-nitrobenzolsulfonsäure-(3-diethylamino-1-propylamid)-hydrochlorid ersetzt, im übrigen weiter nach Beispiel 5 verfahren, dann wird ein Farbstoff der Formel

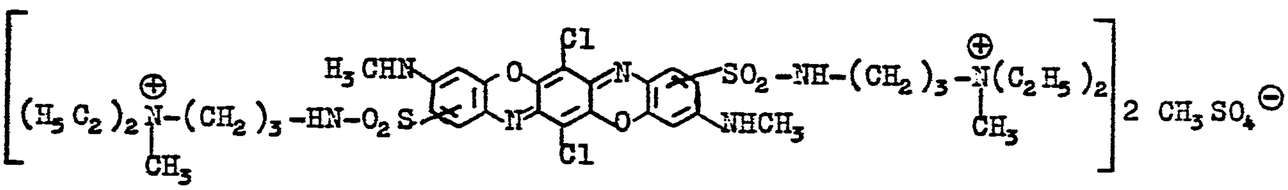

$\lambda_{max}$ = 582 nm, ~ 619 nm in 5 %iger Essigsäure

erhalten, der für die gleichen Anwendungszwecke geeignet ist wie der Farbstoff des Beispiels 5 (C.I. Indicator Number 14).

Beispiel 7

A. 45,0 g 2-Amino-5-nitrobenzolsulfonsäure-(3-dimethylamino-1-propylamid)-hydrochlorid werden in 350 ml Wasser und 70 ml Ethanol bei 30-50°C im Autoklaven unter Zusatz von 10 g Raney-Nickel hydriert. Das Nickel wird nach beendeter Reaktion durch Filtrieren abgetrennt und die erhaltene Lösung auf eine Temperatur von 50°C und einen pH-Wert von 6,5 gestellt.

19,0 g 2,3,5,6-Tetrachlorbenzochinon werden in 60 ml Ethanol suspendiert. Man setzt die Suspension dem oben erhaltenen Filtrat bei 50°C zu und hält den pH-Wert im Reaktionsgemisch durch Zutropfen von 2n Sodalösung auf 6,0-6,5. Wenn der Sodaverbrauch zum Stillstand gekommen ist, wird das Reaktionsgemisch unter Rühren allmählich auf Raumtemperatur abgekühlt. Das Produkt der Formel

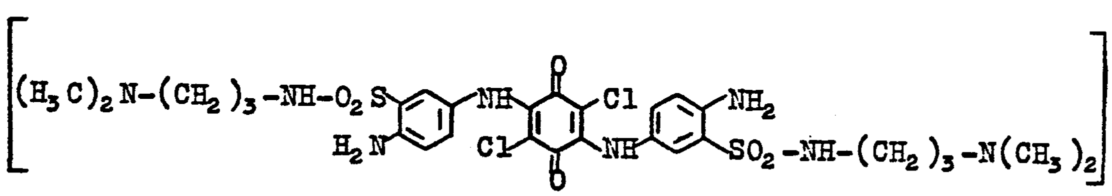

.2 HCl

wird abgekühlt, mit 750 ml 10 %iger und 250 ml 5 %iger Natriumchloridlösung gewaschen und bei 60°C im Umluftschrank getrocknet.

Die eingesetzte Nitroverbindung erhält man durch Kondensation von 2-Chlor-5-nitrobenzolsulfonsäurechlorid mit wäßrigem 1-Amino-3-dimethylaminopropan bei 20°C und nachfolgenden Austausch des 2-ständigen Chloratoms in konzentriertem Ammoniak bei 80°C.

B. 30,0 g des obigen Chinons werden in 125 ml 20 %iges Oleum bei 15-20°C eingetragen. Anschließend trägt man in die erhaltene Lösung 20,8 g Kaliumperoxidisulfat in 30 Minuten so ein, daß die Temperatur im Reaktionsgemisch 25°C nicht übersteigt. Man rührt 30 Minuten bis 1 Stunde bei dieser Temperatur weiter und gibt dann die Mischung auf 1000 g Eis. Nunmehr werden unter Kühlung 275 ml 50 %ige Natronlauge zugetropft, bis der pH-Wert 12,5 erreicht ist. Man rührt die erhaltene Suspension der Farbbase einige Stunden nach, saugt ab und wäscht mit 1 l 25 %iger Natriumchloridlösung. Der Filterkuchen wird in 2 l 25 %iger Natriumchloridlösung verrührt, die Suspension nochmals abgesaugt, der neuerlich erhaltene Filterkuchen mit 1 l 25 %iger und 500 ml 10 %iger Natriumchloridlösung sulfatfrei gewaschen. Die erhaltene Farbbase wird bei 60°C im Umluftschrank getrocknet.

C. 10,0 g der erhaltenen Farbbase werden in 60 ml Nitrobenzol suspendiert; man erwärmt die Lösung auf 60°C und läßt innerhalb von 10 Minuten 4,0 ml Dimethylsulfat zutropfen. Man rührt 1 1/2 Stunden bei dieser Temperatur, kühlt auf 20°C ab und saugt das ausgeschiedene quartäre Farbsalz ab. Der Filterkuchen wird mit Chlorbenzol, zum Schluß mit Petrolether gewaschen und bei 60°C im Umluftschrank getrocknet. Das erhaltene Farbsalz entspricht der Formel

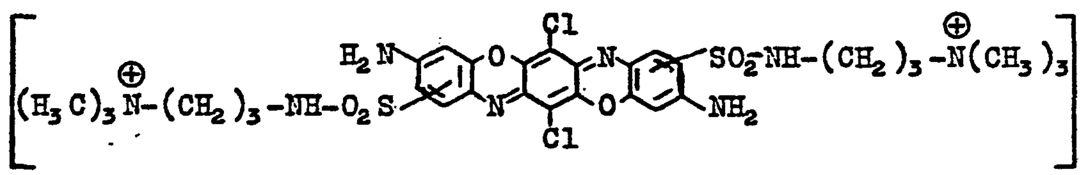 $2\ CH_3SO_4^{\ominus}$

$\lambda_{max}$ = 595 nm in 5 %iger Essigsäure.

Alternativ kann man auch 10,0 g der erhaltenen Farbbase in 50 ml N-Methylpyrrolidon mit 4,0 ml Dimethylsulfat bei 60°C quarternieren und die Isolierung des gelösten Farbsalzes durch Ausfällung und Waschen mit Isopropanol vornehmen oder aber das nach Beispiel 7B erhaltene Salz der Farbbase analog der Verfahrensweise des Beispiels 5D in Wasser suspendieren und bei pH 8,5-9,0 mit Dimethylsulfat quaternisieren.

Das erhaltene Farbsalz ist geeignet zum Färben von Papier in klaren rotstichig blauen Tönen (C.I. Indicator Number 13).

Ähnliche blaue Farbstoffe der allgemeinen Formel I, die geeignet sind zum Färben von Papier, Polyacrylnitril- und Cellulosefasern, werden erhalten, wenn man die in Tabelle 1, Spalte 2, aufgelisteten substituierten 1,4-Benzochinone mit den 5-Amino-2-(alkyl-)aminobenzolsulfonsäureamiden der Spalte 3 in der in den Beispielen 1-7 beschriebenen Weise kondensiert, die Kondensationsprodukte in Oleum oxidativ in die Dioxazinfarbbasen und letztere durch Quaternisierung mit Dimethylsulfat, Diethylsulfat, Toluolsulfonsäuremethylester, Methylchlorid, Methylbromid oder Benzylchlorid in die quartären Ammoniumsalze überführt.

**Tabelle 1**

| Beispiel Nr. | Substituiertes Benzochinon | 5-Amino-2-(alkyl-)amino-benzolsulfonamid-Komponente | C.I Indicator Number |
|---|---|---|---|
| 8 | 2,3,5,6-Tetrachlor-chinon | 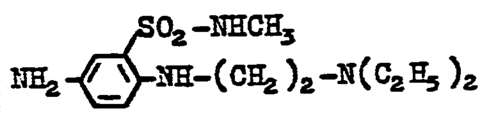 | 14 |
| 9 | " | 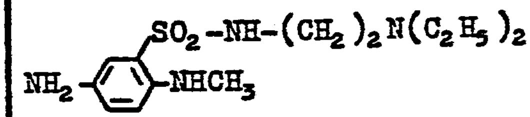 | 14 |
| 10 | " | 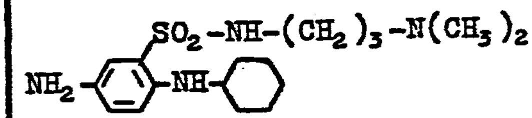 | 14 |

Tabelle 1 (Fortsetzung)

| Beispiel Nr. | Substituiertes Benzochinon | 5-Amino-2-(alkyl-)amino-benzolsulfonamid-Komponente | C.I. Indicator Number |
|---|---|---|---|
| 11 | 2,3,5,6-Tetrachlorchinon | 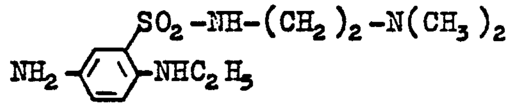 | 14 |
| 12 | 2,3,5,6-Tetrabrom-1,4-benzochinon | 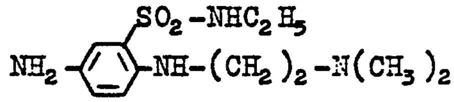 | 14 |
| 13 | " | 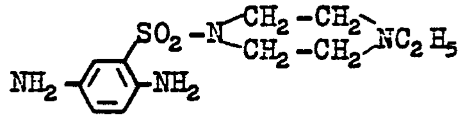 | 13 |
| 14 | " | 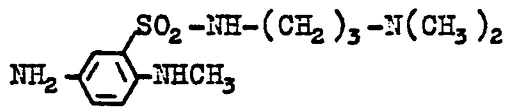 | 14 |
| 15 | 2,5-Dichlor-3,6-diacetylamino-1,4-benzochinon | 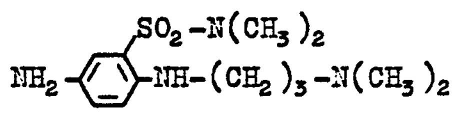 | 14 |
| 16 | 2,5-Dichlor-3,6-dibenzoylamino-1,4-benzochinon | 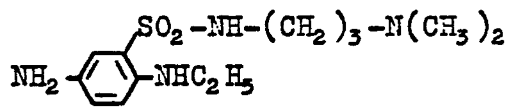 | 14 |
| 17 | 2,3,5,6-Tetrachlor-1,4-benzochinon | 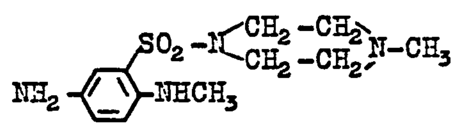 | 14 |
| 18 | " | 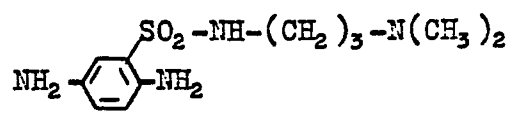 | 13 |
| 19 | " | 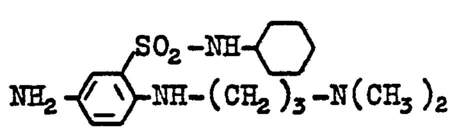 | 14 |
| 20 | " | 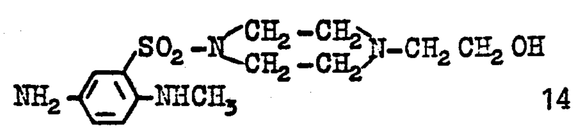 | 14 |

Tabelle 1 (Fortsetzung)

| Beispiel Nr. | Substituiertes Benzochinon | 5-Amino-2-(alkyl-)amino-benzolsulfonamid-Komponente | C.I. Indicator Number |
|---|---|---|---|
| 21 | 2,3,5,6-Tetrachlor-1,4-benzochinon | 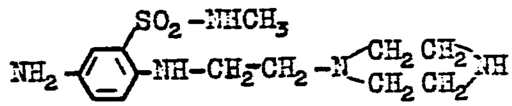 | 14 |
| 22 | " | 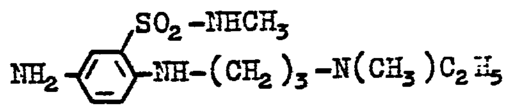 | 14 |
| 23 | " | 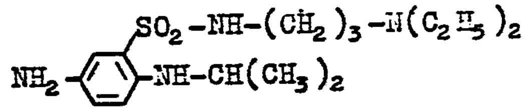 | 14 |
| 24 | 2,3,5,6-Tetramethoxy-1,4-benzochinon | 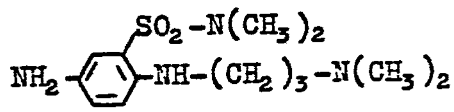 | 14 |
| 25 | 2,3,5,6-Tetraphenoxy-1,4-benzochinon | 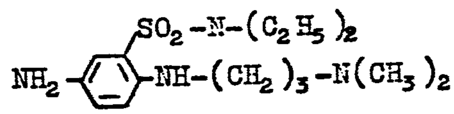 | 14 |
| 26 | 2-Methyl-3,5,6-trichlor-1,4-benzochinon | 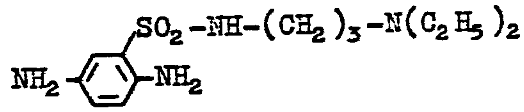 | 13 |
| 27 | 2,5-Dichlor-1,4-benzochinon-3,6-dicarbonsäureanilid | 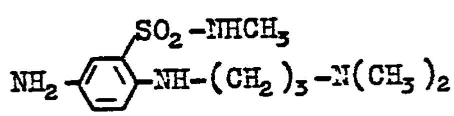 | 14 |
| 28 | 2,5-Dibrom-1,4-benzochinon-3,6-dicarbonsäureethylester | 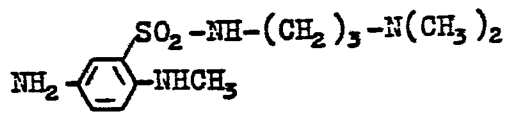 | 14 |

Tabelle 1 (Fortsetzung)

| Beispiel Nr. | Substituiertes Benzochinon | 5-Amino-2-(alkyl-)amino-benzolsulfonamid-Komponenten | C.I. Indicator Number |
|---|---|---|---|
| 29 | 2,5-Dibrom-1,4-benzochinon-3,6-dicarbonsäureamid | 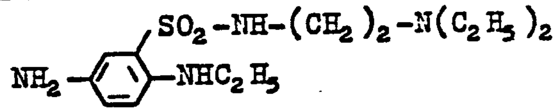 | 14 |
| 30 | 2,5-Dibrom-3,6-di-benzoylamino-1,4-benzochinon | 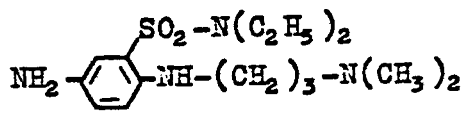 | 14 |
| 31 | 2,5-Dichlor-3,6-di-acetylamino-1,4-benzochinon | 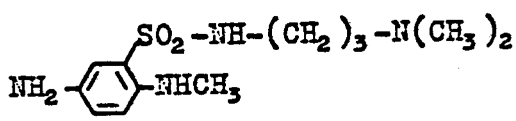 | 14 |
| 32 | 2,3,5,6-Tetrachlor-chinon | 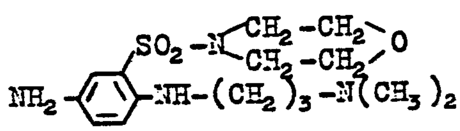 | 14 |
| 33 | " | 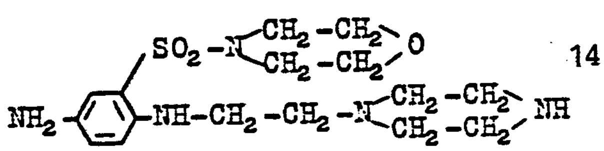 | 14 |
| 34 | " | 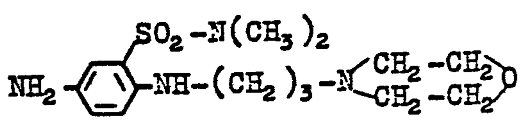 | 14 |
| 35 | " | 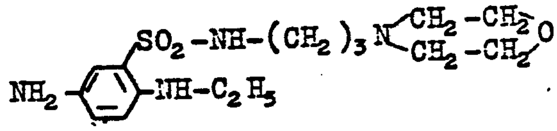 | 14 |
| 36 | " | 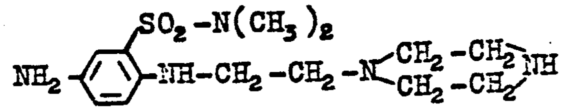 | 14 |

Tabelle 1 (Fortsetzung)

| Beispiel Nr. | Substituiertes Benzochinon | 5-Amino-2-(alkyl-)amino-benzolsulfamid-Komponente | C.I. Indicator Number |
|---|---|---|---|
| 37 | 2,3,5,6-Tetrachlor-chinon | 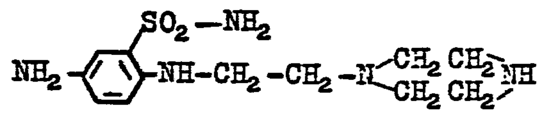 | 14 |
| 38 | " | 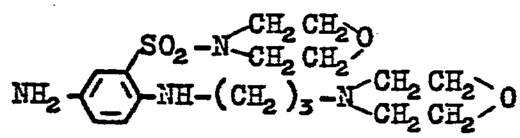 | 14 |
| 39 | " | 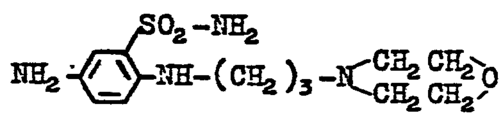 | 14 |

Beispiel 40

A. 33,7 g 2-Ethylamino-5-amino-benzolsulfonsäure-(3-dimethylamino-1-propylamid)-hydrochlorid werden in 300 ml Wasser bei 40°C gelöst. Man stellt einen pH-Wert von 6 ein und setzt eine heiße Lösung von 10,8 g 1,4-Benzochinon in 250 ml Ethanol zu. Man hält den pH-Wert mit wenig 1n Sodalösung weiter auf 6, die Temperatur auf 40-45°C und rührt 12 Stunden unter diesen Bedingungen nach. Nach beendeter Reaktion kühlt man ab auf 20°C, läßt zu der braunen Lösung 1250 ml 25 %ige Natriumchloridlösung zutropfen, rührt noch einige Zeit nach und saugt die braune Fällung ab. Der Filterkuchen wird mit 10 %iger Natriumchloridlösung gewaschen und bei 60°C im Umluftschrank getrocknet.

B. 20,0 g des Produktes aus Beispiel 40A werden in 80 ml 20 %iges Oleum bei 20-25°C eingetragen.

Nach vollständigem Lösen werden 13,4 g Kaliumperoxidisulfat innnerhalb 30 Minuten eingetragen. Man rührt bei 25-30°C mehrere Stunden, gießt anschließend den Ansatz auf 650 g Eis, verdünnt mit 1,3 l 25 %iger Natriumchloridlösung, saugt die Fällung ab und wäscht den Kuchen mit 25 %iger Natriumchloridlösung sulfatfrei. Der erhaltene blaue Farbstoff kann als Salz der Base

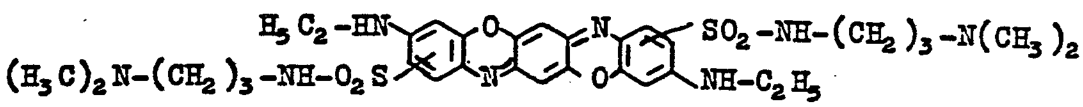

getrocknet und für färberische Zwecke, z.B. zum Färben von Polyacrylnitril, eingesetzt werden (C.I. Indicator Number 14).

In analoger Weise wie in den Beispielen 1B-1D kann man aus dem Salz der Farbbase mit Dimethylsulfat das quartäre Ammoniumsalz herstellen, das sich bestens zum Färben von Papier, Polyacrylnitril- und Cellulosefasern eignet.

Beispiel 41

Setzt man in Beispiel 40 an Stelle des 1,4-Benzochinons 13,6 g 2,5-Dimethyl-1,4-benzochinon ein und verfährt im übrigen analog, so erhält man das Salz der Farbbase

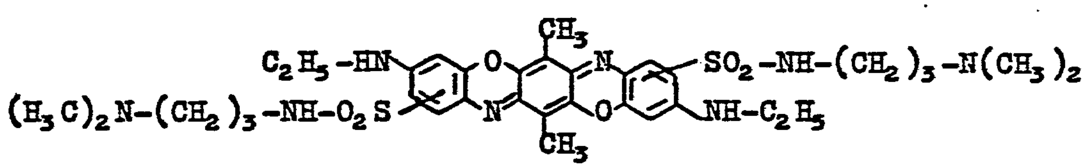

das ebenfalls wie in den Beispielen 1B-1D beschrieben mit Dimethylsulfat in das quartäre Salz überführt werden kann.

Weitere blaue Farbstoffe der allgemeinen Formel I, die geeignet sind zum Färben von Papier, Polyacrylnitril- und Cellulosefasern (C.I. Indicator Number 14), erhält man, wenn man die in Tabelle 2, Spalte 2, aufgeführten 1,4-Benzochinone mit den 5-Amino-2-(alkyl-)aminobenzolsulfonsäureamiden der Spalte 3 in der im Beispiel 40 beschriebenen Weise umsetzt, die erhaltenen Zwischenprodukte in Oleum in die Triphendioxazinfarbbasen überführt und letztere gegebenenfalls mit Dimethylsulfat oder Toluolsulfonsäuremethylester quaterniert.

Tabelle 2

| Beispiel Nr. | 1,4-Benzochinon-Komponente | 5-Amino-2-(alkyl-)aminobenzol-sulfonamid-Komponente |
|---|---|---|
| 42 | 2,5-Dimethyl-1,4-benzochinon | 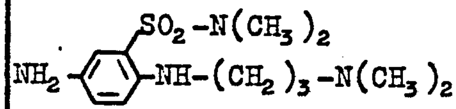 |
| 43 | 2-Methyl-5-chlor-1,4-benzochinon | 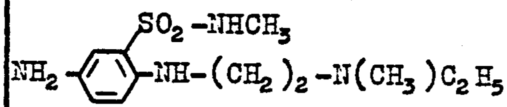 |
| 44 | 2-Methyl-1,4-benzochinon | 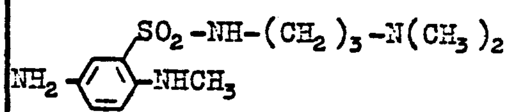 |
| 45 | 2-Ethyl-1,4-benzochinon | 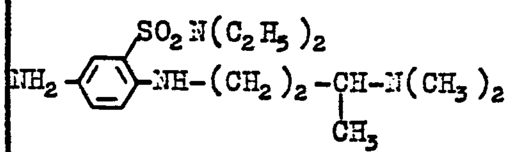 |
| 46 | 2-Phenyl-1,4-benzochinon | 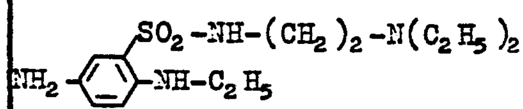 |
| 47 | 2-Methoxy-5-methyl-1,4-benzochinon | 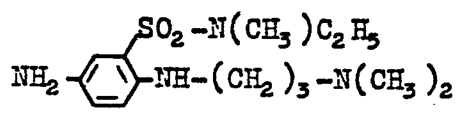 |
| 48 | 1,4-Benzochinon | 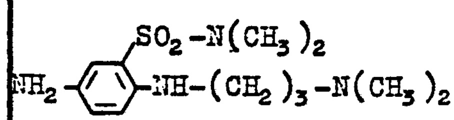 |

Beispiele 49-54

Ähnliche Farbstoffe erhält man auch, wenn man im Beispiel 1 an Stelle des dort hergestellten 1-(2'-Diethylaminosulfonyl-4'-aminophenyl)-amino-3-dimethylaminopropanhydrochlorids die Hydrochloride folgender Aminobenzolsulfonamide der Formel (XIII) mit 2,3,5,6-Tetrachlorbenzochinon kondensiert:

| Beispiel Nr. | Sulfonamidkomponente |
|---|---|
| 49 | 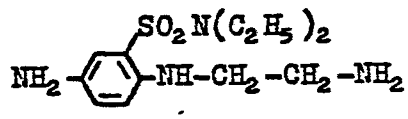 |
| 50 | 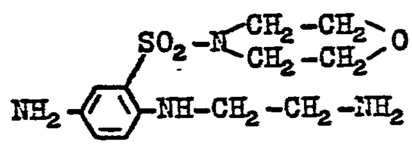 |
| 51 | 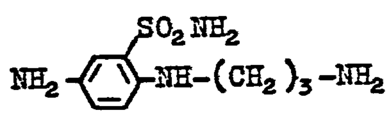 |
| 52 | 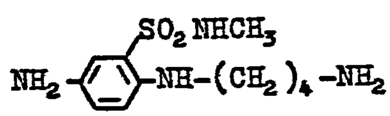 |
| 53 | 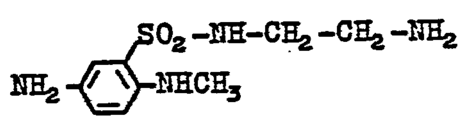 |
| 54 | 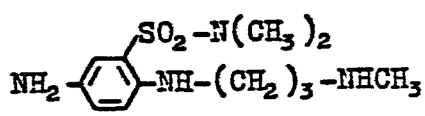 |

und im Anschluß daran weiter verfährt wie im Beispiel 1, jedoch die erhaltenen Farbbasen als Salze zum Färben verwendet, ohne eine Quaternierung durchzuführen.

0148390

Patentansprüche

1. Triphendioxazinfarbstoffe der Formel

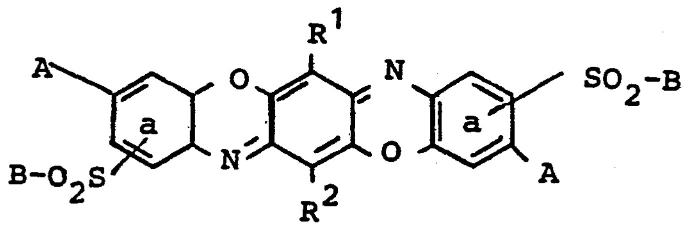

worin $R_1$ und $R_2$ unabhängig voneinander Wasserstoff, Halogen, Alkyl, Cyclohexyl, Aryl, Alkoxy, Aryloxy, CN, $CONH_2$, CONH-Alkyl, $CON(Alkyl)_2$, CONH-Aryl, COOAlkyl, NH-CO-Alkyl, NH-CO-Aryl oder NH-Aryl und

A und B unabhängig voneinander einen Aminrest oder einen Rest eines Polyamins, das protoniert oder quaterniert sein kann,

bedeuten, mit der Maßgabe, daß mindestens einer der Reste A oder B für einen solchen Polyaminrest steht, und die genannten Substituenten und die Ringe a durch in der Farbstoffchemie übliche nichtionische, kationische oder anionische Reste substituiert sein können, mit der Maßgabe, daß die Summe der anionischen Gruppen kleiner ist als die Summe der protonierbaren und quaternierbaren Stickstoffatome in A und B.

2. Triphendioxazinfarbstoffe gemäß Anspruch 1, wobei

A und B unabhängig voneinander für einen Rest der Formeln,

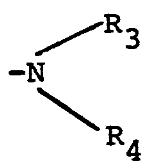 , 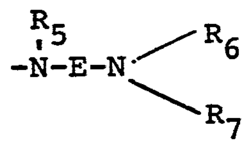 ,

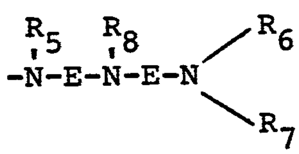 , 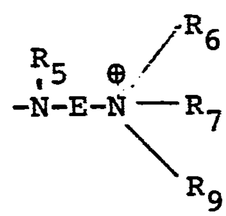 $X^{\ominus}$ ,

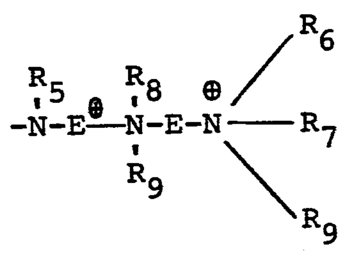 $2\ X^{\ominus}$

stehen, worin

$R_5$-$R_8$ Wasserstoff, Alkyl oder Aralkyl und

$R_9$ Wasserstoff, Alkyl oder Aralkyl bedeuten, oder

$R_3$ und $R_4$, $R_5$ mit $R_6$, $R_5$ oder $R_6$ mit $R_8$, $R_6$ mit $R_7$ oder $R_6$ mit $R_7$ und $R_9$ zu einem Ring geschlossen sind,

E für gegebenenfalls verzweigtes $C_2$-$C_6$-Alkylen, Cyclohexylen, Phenylen oder einen Rest der Formeln

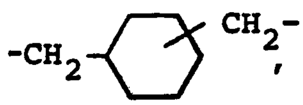 , 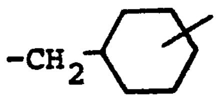 , 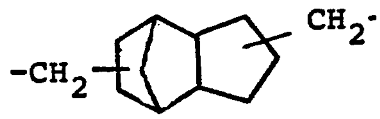 oder

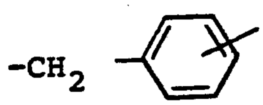 und

$X^{\ominus}$ für ein Anion stehen, und

worin die genannten cyclischen und acyclischen Reste ihrerseits durch in der Farbstoffchemie übliche nichtionische oder kationische Reste substituiert sein können.

3. Triphendioxazinfarbstoffe gemäß Anspruch 1 der Formel

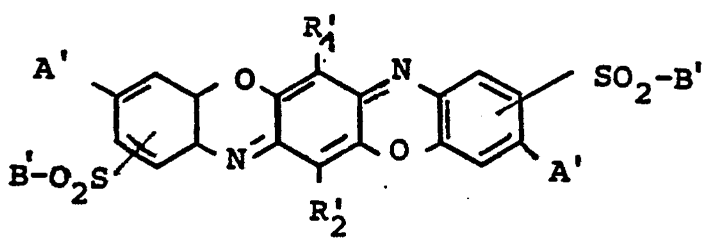

worin

$R_1'$ und $R_2'$ Wasserstoff oder Halogen,
A' und B' einen Rest der Formeln

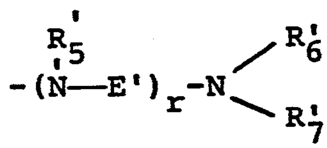 , 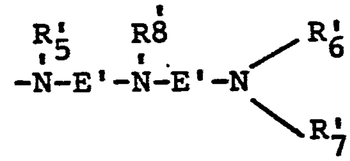

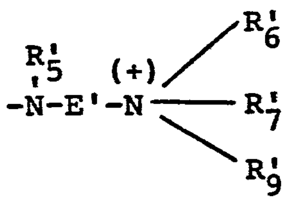 $X^{(-)}$ oder 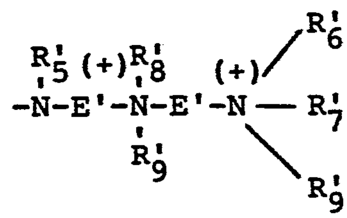 2 $X^{(-)}$

r 0 oder 1,

$R_5'$ - $R_9'$ Wasserstoff, gegebenenfalls durch Hydroxy, $C_1$-$C_4$-Alkoxy, Halogen, Cyan, $C_1$-$C_4$-Alkoxycarbonyl oder $C_1$-$C_4$-Alkylcarbonyl substituiertes $C_1$-$C_4$-Alkyl,

$R_9'$ außerdem gegebenenfalls durch $C_1$-$C_4$-Alkyl, Hydroxy, $C_1$-$C_4$-Alkoxy oder Halogen substituiertes Benzyl oder Phenylethyl, und

E' $C_2$-$C_6$-Alkylen, Cyclohexylen, Phenylen oder einen Rest der Formeln

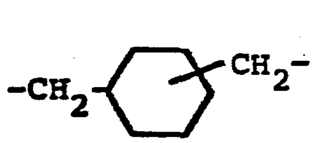 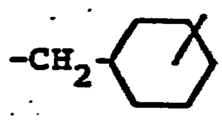 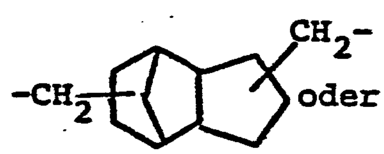 oder

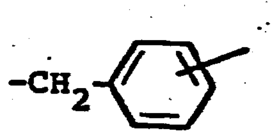 wobei die Sechsringe durch $C_1$-$C_4$-Alkyl substituiert sein können, bedeuten, oder

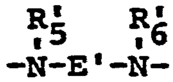 oder 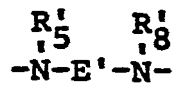 oder 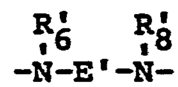

einen gegebenenfalls durch $C_1$-$C_4$-Alkyl substituierten Piperazin- oder Imidazolidin-Ring darstellen, oder

$R_7'$-N-$R_9'$ einen gegebenenfalls durch $C_1$-$C_4$-Alkyl substituierten Piperidin-, Morpholin-, Piperazin- oder Pyrrolidin-Ring oder

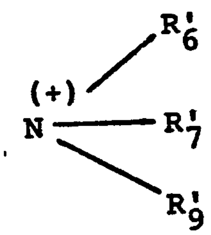

einen gegebenenfalls durch $C_1$-$C_4$-Alkyl substituierten Pyridinium-Rest und

$X^{(-)}$ ein Anion darstellen und mindestens einer der Reste A' und B' für einen der genannten gegebenenfalls protonierten oder quaternierten Polyaminreste steht.

4. Triphendioxazinfarbstoffe gemäß Anspruch 1 der Formeln

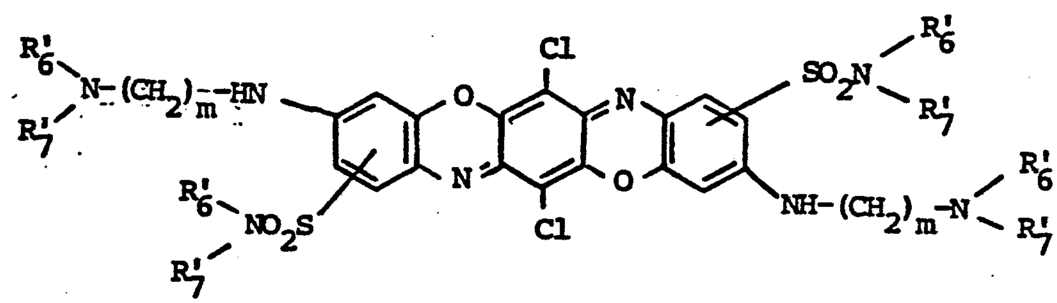

und

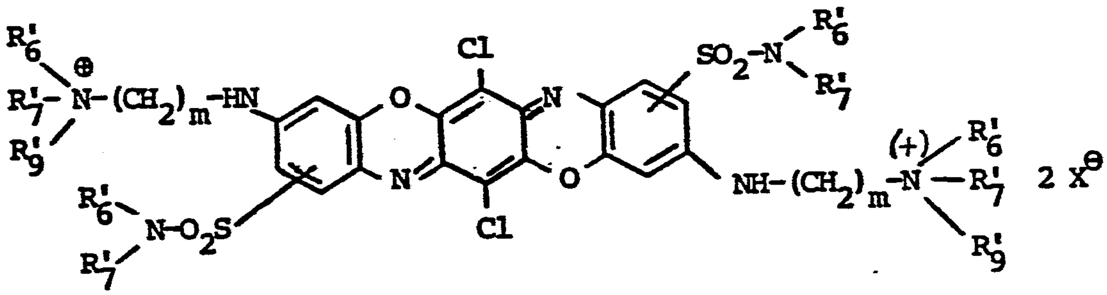

worin $R'_6$, $R'_7$, $R'_9$ und $Y^{(-)}$ die in Anspruch 3 angegebene Bedeutung haben, und

m für 2-4 steht.

5. Triphendioxazinfarbstoffe gemäß Anspruch 1 der Formeln

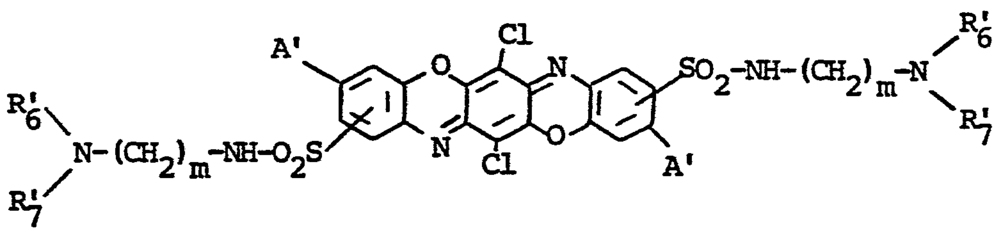

und

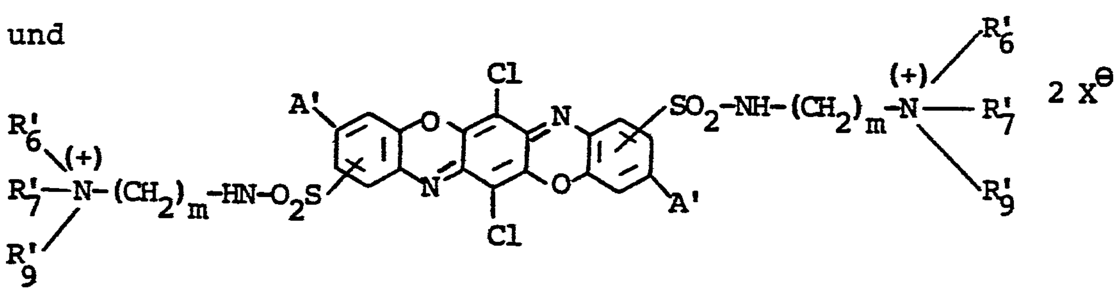

worin $R'_6$, $R'_7$, $R'_9$, n und $X^{\ominus}$ die in den Ansprüchen 3 und 4 angegebene Bedeutung haben, und A' für Amino, $C_1$-$C_4$-Alkylamino oder Cyclohexylamino steht.

6. Triphendioxazinfarbstoffe gemäß Anspruch 4, wobei

$R_6'$ und $R_7'$ $C_1$-$C_4$-Alkyl,
$R_9'$ Wasserstoff, $C_1$-$C_4$-Alkyl oder Benzyl oder

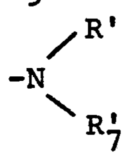 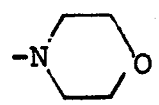 oder 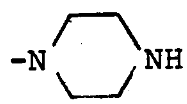 bedeuten.

7. Triphendioxazinfarbstoffe gemäß Anspruch 5, wobei

$R_6'$ und $R_7'$ $C_1$-$C_4$-Alkyl,
$R_9'$ Wasserstoff, $C_1$-$C_5$-Alkyl oder Benzyl oder

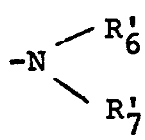 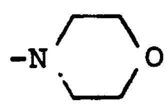 oder 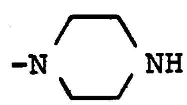 bedeuten.

8. Verfahren zur Herstellung von Triphendioxazinfarbstoffen des Anspruchs 1, dadurch gekennzeichnet, daß man 1,4-Benzochinone der Formel

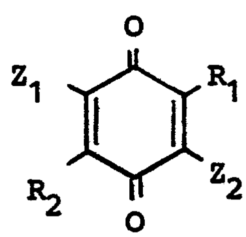

worin

$R_1$, $R_2$ die in Anspruch 1 angegebene Bedeutung haben und $Z_1$ und $Z_2$ Wasserstoff, Cl, Br, OAlkyl oder O-Aryl bedeuten,

mit 5-Aminobenzolsulfonamiden der Formel

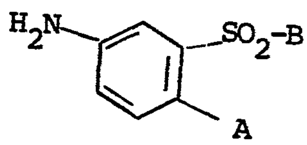

worin in A und B die in Anspruch 1 angegebene Bedeutung haben, kondensiert und das erhaltene Produkt ringschließt und gegebenenfalls protoniert oder quaterniert.

9. Verwendung der Triphendioxazinfarbstoffe des Anspruchs 1 zum Färben von mit basischen Farbstoffen färbbaren Substraten, insbesondere Papier.

10. Mit den Triphendioxazinfarbstoffen des Anspruchs 1 gefärbtes oder bedrucktes Material.